# EUROPÄISCHE PATENTSCHRIFT

(11) **EP 3 894 744 B1**
(45) Veröffentlichungstag und Bekanntmachung des Hinweises auf die Patenterteilung: **05.07.2023**
(21) Anmeldenummer: 19842747.8
(22) Anmeldetag: 13.12.2019
(51) Int. Cl.: F21S 43/14, F21S 43/20, F21S 43/27, F21S 43/50, B60J 10/30, B60J 10/15, B60J 10/24, B60J 10/27, B60J 10/23, B60J 10/235, B60J 10/273, B60R 13/06, B60R 13/00, F21V 31/00, F21V 3/02, F21V 17/16, B60J 10/26, B60J 10/265, B60J 10/248, B60J 10/84, B60J 10/86

(54) **BELEUCHTUNGSLEISTE UND FENSTER- ODER TÜRELEMENT MIT BELEUCHTUNGSLEISTE**
LIGHT STRIP AND WINDOW OR DOOR WITH SUCH A LIGHT STRIP
BAGUETTE D'ÉCLAIRAGE ET ÉLÉMENT FENÊTRE OU PORTE POURVU D'UNE BAGUETTE D'ÉCLAIRAGE

(30) Priorität: 13.12.2018 DE 102018132076
(43) Veröffentlichungstag der Anmeldung: 20.10.2021
(73) Patentinhaber: Gummi-Welz GmbH u. Co. KG Gummi-Kunststofftechnik-Schaumstoffe, 89231 Neu-Ulm (DE)
(72) Erfinder: GREIN, Horst, 89233 Neu-Ulm (DE)
(74) Vertreter: Ter Meer Steinmeister & Partner
(86) Internationale Anmeldenummer: PCT/EP2019/085046
(87) Internationale Veröffentlichungsnummer: WO 2020/120729

(56) Entgegenhaltungen:
- EP-A2- 1 688 308
- DE-A1-102010 030 863
- DE-A1-102011 106 318
- DE-A1-102015 117 865
- DE-A1-102016 214 360
- FR-A1- 3 051 732
- US-A1- 2005 073 852
- US-A1- 2014 268 727
- US-A1- 2016 176 336

## Beschreibung

Die Erfindung betrifft eine Beleuchtungsleiste für ein Fenster- oder ein Türlement von Fahrzeugen. Weiter betrifft sie ein Fenster- oder Türelement mit einer Beleuchtungsleiste.

Die Komplexität moderner Fahrzeuge und Einrichtungen nimmt weiter zu. Daher ergibt sich die Notwendigkeit, in neu zu entwickelnde als auch in bestehende Fahrzeuge bzw. Einrichtungen mit Fenster- oder Türelementen Signalisierungsvorrichtungen zu integrieren. Diese dienen in erster Linie dazu, den Personen, die diese Fahrzeuge oder Einrichtungen nutzen, einen Zustand zu signalisieren, der einen Hinweis bzw. eine Warnung für die Benutzer darstellt.

EP 1 688 308 A2 zeigt ein Fahrzeugverkleidungsteil mit einer lichtdurchlässigen Maske, die von einem Substrat umgeben ist. Die lichtdurchlässige Maske umgibt eine Lichtquelle.

Die vorliegende Erfindung wird am Beispiel eines Zuges, beispielsweise für den öffentlichen Nahverkehr, beschrieben. Sie ist jedoch auch für Personenfahrzeuge als auch für Busse bzw. für stationäre Einrichtungen mit Fenster- und Türelementen geeignet. Fenster- oder Türelemente, die in derartigen Fahrzeugen eingesetzt werden, zeichnen sich meist dadurch aus, dass eine transparente Scheibe auf einem Rahmenprofil aufliegt, wobei sich zwischen Rahmenprofil und der Scheibe ein Winkel ergibt. Dieser Winkel kann stumpf, rechtwinklig oder spitz sein.

Die Erfindung ist in erster Linie als Nachrüstlösung gedacht. Jedoch lässt sich die Erfindung auch ohne weiteres bei Neuinstallationen und Entwicklungen integrieren.

Das Rahmenprofil, auf dem die Scheibe aufliegt bzw. an dem die Scheibe befestigt ist, ist meist aus Aluminium oder Stahl hergestellt und bietet somit eine ebene Auflagefläche, an der die erfindungsgemäße Beleuchtungsleiste befestigt werden kann.

Aufgabe der Erfindung ist es daher, eine Beleuchtungsleiste und ein Fenster- oder Türelement mit einer Beleuchtungsleiste anzugeben, die einfach montierbar sind und die robust gegen Vandalismus sind.

Die erfindungsgemäße Beleuchtungsleiste ist einfach nachzurüsten und strahlt Licht in alle Richtungen ab, vorzugweise in Richtungen senkrecht zur Auflagefläche vom Rahmenprofil und senkrecht zur Scheibe, so dass das Licht von beiden Seiten der Scheibe für Personen erkennbar ist und beispielsweise bei einem Einsteigevorgang in ein Schienenfahrzeug von innen als auch von außen erkannt werden kann.

Eine Überlegung der Erfindung geht davon aus, dass die Beleuchtungsleiste einfach herstellbar sein muss. Dazu weist die Beleuchtungsleiste einen Befestigungssockel, ein transparentes Innenprofil und ein Hüllprofil auf, welches das Innenprofil wenigstens teilweise umgibt. Dadurch lässt sich ein Leuchtelement einfach in das Innenprofil integrieren, wobei durch den Befestigungssockel eine einfache Montage ermöglicht wird. Ein ausreichender Schutz des transparenten Innenprofils wird durch das stabile Hüllprofil bereitgestellt, wobei das Hüllprofil gleichzeitig eine einfache Montage am Befestigungssockel gewährleistet.

Ein weiterer Aspekt der Erfindung berücksichtigt, dass der oben beschriebene Winkel in verschiedenen Fahrzeugen unterschiedlich ist, so dass eine Anpassung der Beleuchtungsleiste für verschiedene Fahrzeuge erforderlich ist.

Um diesen Anpassungsaufwand möglichst gering zu halten, umfasst die erfindungsgemäße Beleuchtungsleiste die Merkmale von Anspruch 1. Der oder die Befestigungssockel können einfach auf dem Rahmenprofil bzw. der Scheibe befestigt werden. Das Rahmenprofil besteht bevorzugt aus Aluminium oder Stahl, so dass sich der oder die Befestigungssockel auf dem Rahmenprofil mittels Schrauben oder Nieten anbringen lassen. Alternativ bzw. zusätzlich können die Befestigungssockel auch auf das Rahmenprofil geklebt werden. Ebenso ist es möglich, den oder die Befestigungssockel auch auf der Scheibe anzukleben.

Das innenliegende Profil oder Innenprofil weist vorzugsweise ein oder mehrere Leuchtmittel auf bzw. nimmt in seinem Innern das eine oder die mehreren Leuchtmittel auf. Das Leuchtmittel ist von dem Innenprofil umgeben. Das Innenprofil ist wenigstens teilweise transparent ausgebildet, so dass ein vom Leuchtmittel abgegebenes Licht in alle Richtungen abgestrahlt werden kann und somit am Außenumfang des transparenten Innenprofils erkennbar ist.

Das transparente Innenprofil ist vorzugsweise aus einem Elastomer hergestellt. Das transparente Innenprofil weist eine vorgegebene Flexibilität auf.

Das transparente Innenprofil ist vorzugweise aus Silikon ausgebildet und ermöglicht somit ein einfaches Einführen bzw. Integrieren des wenigstens einen Leuchtmittels in eine Kammer innerhalb des Innenprofils. Durch das Innenprofil ist ein ausreichender Schutz des Leuchtmittels gegen äußere Einflüsse gewährleistet.

Das transparente Innenprofil und/oder das Hüllprofil können mittels Strangpressverfahren oder Extrusionsverfahren hergestellt werden.

Um das Innenprofil mit dem Leuchtmittel weiter gegen äußere Einflüsse zu schützen und eine stabile Fixierung des Innenprofils mit dem Leuchtmittel am Befestigungssockel und mit diesem an der Scheibe bzw. am Rahmenprofil zu gewährleisten, wird das Innenprofil mit dem Leuchtmittel von einem Hüllprofil umgeben bzw. in diesem aufgenommen, welches das Innenprofil wenigstens teilweise an seinem Außenumfang umgibt.

Das Hüllprofil lässt sich in seiner äußeren Form bzw. durch seine Bestandteile vorzugsweise an die Winkel zwischen Rahmenprofil und Scheibe anpassen, so dass mittels verschiedener Hüllprofile auf verschiedene Einsatzbereiche reagiert werden kann und somit verschiedene Winkel zwischen Rahmenprofil und Scheibe realisiert werden können.

Ein Bereich des Winkels von ca. 70° bis 110° zwischen Rahmenprofil und Scheibe lässt sich auch ohne verändertes Hüllprofil realisieren. Dazu wird der Befestigungssockel in seiner Position am Rahmenprofil oder der Scheibe verschoben, sodass der Abstützsteg bzw. der Montagesteg die Abdichtung zum Rahmenprofil bzw. zur Scheibe gewährleisten.

Das Hüllprofil ist vorzugsweise aus einem Material hergestellt, welches plastisch ist, jedoch eine gewisse Biegsamkeit aufweist.

Das Hüllprofil ist aus einem anderen Material als das Innenprofil hergestellt.

Das Hüllprofil weist Befestigungsstege auf, mit denen das Hüllprofil am Befestigungssockel befestigt wird. Dieses erfolgt durch einen Clip-Mechanismus, so dass ein Einsetzen des Hüllprofils an dem Befestigungssockel einfach möglich ist.

Vorzugsweise ist der wenigstens eine Befestigungssockel aus Kunststoff oder Metall, vorzugsweise Aluminium hergestellt. Zur Herstellung kann ein Spritzgussverfahren oder ein Sinterprozess, aber auch ein spanendes Verfahren verwendet werden.

Das Hüllprofil weist weiter vorzugsweise einen Abstützsteg auf, der den Bereich zwischen Befestigungssockel und Rahmenprofil abschirmt, um ein Abknicken des Hüllprofils mit dem innenliegenden Profil zu verhindern und um ein Hintergreifen der Beleuchtungsleiste durch Personen oder ein Eindringen von Schmutz zu verhindern und um eine Beschädigung der Beleuchtungsleiste durch bspw. Vandalismus zu vermeiden.

Der Abstützsteg steht vom Hüllprofil ab und liegt mit seinem abstehenden Ende am Rahmenprofil bzw. an der Scheibe an und verhindert somit ein Eindringen von Schmutz in die Beleuchtungsleiste.

Das Hüllprofil weist weiter vorzugsweise auf der Seite der Scheibe einen Montagesteg auf, der ebenfalls vom Hüllprofil absteht und teilweise biegsam ist. Der Montagesteg liegt an der Scheibe an, kann jedoch mittels eines Spezialwerkzeugs, welches zwischen Montagesteg und Scheibe einführbar ist, so gebogen werden, dass das Hüllprofil vom Befestigungssockel gelöst werden kann. Zwischen Montagesteg und Scheibe kann auch ein minimaler Spalt vorhanden sein, um ein Einfädeln des Spezialwerkzeugs zu ermöglichen. Das Hüllprofil ist ähnlich wie das Innenprofil wenigstens teilweise transparent ausgebildet, so dass ein Lichtaustritt in alle Richtungen des Hüllprofils ermöglicht wird und somit eine optimale Signalisierungsfunktion gewährleistet werden kann.

Gemäß einem Aspekt wird eine Beleuchtungsleiste angegeben, umfassend: wenigstens einen Befestigungssockel zur Befestigung an einem Rahmenprofil und/oder einer transparenten Scheibe, ein wenigstens teilweise transparentes Innenprofil, in dem ein oder mehrere Leuchtelement aufgenommen sind, ein wenigstens teilweise transparentes Hüllprofil, welches das Innenprofil wenigstens teilweise umgibt, wobei das wenigstens teilweise transparente Hüllprofil an dem wenigstens einen Befestigungssockel lösbar befestigt ist.

In einer vorteilhaften Ausgestaltung weist der Befestigungssockel eine ebene Fläche zur Anlage an dem Rahmenprofil und/oder an der transparenten Scheibe auf.

In einer vorteilhaften Ausgestaltung weist der Befestigungssockel wenigstens ein als Vorsprung ausgebildetes Kopplungselement auf. Der Vorsprung ist hakenartig ausgebildet, so dass ein einfaches Hineinklicken des Hüllprofils ermöglicht wird.

In einer vorteilhaften Ausgestaltung weist das Hüllprofil wenigstens einen dem Vorsprung des Kopplungselements des Befestigungssockels entsprechenden Vorsprung auf, um in das wenigstens eine Kopplungselement des Befestigungssockels einzugreifen und das Hüllprofil an dem Befestigungssockel festzulegen.

In einer vorteilhaften Ausgestaltung ist der wenigstens eine Vorsprung des Befestigungssockels in Richtung einer Mittellängsachse der Beleuchtungsleiste oder von dieser Mittellängsachse der Beleuchtungsleiste hinweg gerichtet.

In einer vorteilhaften Ausgestaltung weist der Befestigungssockel zwei Vorsprünge auf, die beide zur Mittellängsachse der Beleuchtungsleiste oder von dieser Mittellängsachse der Beleuchtungsleiste hinweg gerichtet sind.

In einer vorteilhaften Ausgestaltung ist das wenigstens teilweise transparente Innenprofil aus Silikon gebildet. Dadurch ist eine einfache und flexible Herstellung möglich. Außerdem ist das Silikon mit verschiedenen Transparenzstufen herstellbar, so dass eine gute Lichtausbeute erzielt werden kann und/oder mittels eines geringen Anteils von weißen oder reflektierenden Materialanteilen ein Diffusionseffekt erreicht werden kann.

Bevorzugt weist das teilweise transparente Innenprofil wenigstens eine Kammer zur Aufnahme des wenigstens einen Leuchtelements auf.

Bevorzugt umfasst das wenigstens teilweise transparente Innenprofil wenigstens eine weitere in Abstrahlrichtung des Leuchtelements liegende weitere Kammer auf, die zur Streuung des vom Leuchtelement abgestrahlten Lichts dient oder um eine weitere Flexibilität der Beleuchtungsleiste zu gewährleisten.

Bevorzugt umgibt die weitere Kammer das Leuchtelement wenigstens teilweise an mehr als einer Seite. Dadurch müssen die Lichtstrahlen mehrere Materialien mit verschiedenen Brechungsindizes durchlaufen, wodurch eine diffuse Lichtstrahlung erreicht wird.

Weiter ist bevorzugt, dass die weitere Kammer vom Leuchtelement beabstandet ist und ein flexibles Material zwischen der Kammer mit dem Leuchtelement und der weiteren Kammer vorhanden ist.

In einer vorteilhaften Ausgestaltung weist die wenigstens eine weitere Kammer eine in Abstrahlrichtung weisende gekrümmte Oberfläche auf. Auch dadurch wird die Sichtbarkeit des Lichts in alle Richtungen verbessert.

Vorteilhafterweise weist das wenigstens teilweise transparente Innenprofil wenigstens einen nach außen abstehenden Befestigungsvorsprung auf, der in eine Ausnehmung des Hüllprofils eingreift.

Vorteilhafterweise umgibt das Hüllprofil mehr als die Hälfte vom Außenumfang des Innenprofils. Dadurch wird ein sicherer Sitz des Innenprofils innerhalb des Hüllprofils realisiert.

Bevorzugt weist das Hüllprofil eine Innenkontur auf, die der Außenkontur des Innenprofils entspricht.

In einer weiteren Ausgestaltung liegt eine Innenkontur des Hüllprofils wenigstens teilweise an der Außenkontur des Innenprofils an.

In einer weiteren Ausgestaltung weist das Hüllprofil Befestigungsstreben auf, die sich in Richtung Befestigungssockel erstrecken und an ihren Enden jeweils wenigstens einen Vorsprung aufweisen, der in die Kopplungselemente des Befestigungssockels eingreift.

Bevorzugt sind die Vorsprünge des Hüllprofils nach außen gerichtet und greifen hakenartig in die Kopplungselemente des Befestigungssockels ein.

Bevorzugt ist zwischen dem Innenprofil und dem Befestigungssockel ein Luftspalt vorhanden.

In einer weiteren Ausgestaltung weist das Innenprofil einen Bereich auf, der dem Befestigungssockel zugewandt ist, wobei zwischen diesem Bereich und dem Befestigungssockel ein Luftspalt vorhanden ist.

Bevorzugt weist das Hüllprofil einen Abstützsteg auf, der vom Hüllprofil absteht und eine Kammer zwischen einer der Befestigungsstreben und dem Abstützsteg bildet.

Bevorzugt liegt der Abstützsteg am Rahmenprofil oder an der transparenten Scheibe an, um ein Abknicken des Hüllprofils mit dem innenliegenden Innenprofil zu verhindern.

Bevorzugt weist das Hüllprofil einen Montagesteg auf, der vom Hüllprofil absteht und in Richtung Rahmenprofil oder transparente Scheibe gerichtet ist, wobei der Montagesteg einen Zugang zu einer der Befestigungsstreben des Hüllprofils abschirmt und eine Beschädigung durch Vandalismus verhindert.

In einer bevorzugten Ausgestaltung ist die Befestigungsstrebe des Hüllprofils an der Seite des Montagestegs mittels eines Werkzeugs, welches um den Montagesteg herumgreift, vom Kopplungselement lösbar.

In einer weiteren Ausgestaltung ist die Beleuchtungsleiste an mehreren Befestigungssockeln befestigt, die voneinander beabstandet sind.

In einer weiteren Ausgestaltung ist der wenigstens eine Befestigungssockel am Rahmenprofil oder der Scheibe angeklebt und/oder angeschraubt und/oder angenietet.

In einer weiteren Ausgestaltung ist das Hüllprofil steifer ist als das Innenprofil.

In einer weiteren Ausgestaltung ist das Hüllprofil aus einem Thermoplast, vorzugsweise Polycarbonat, PMMA oder PVC hergestellt, wobei es vorzugsweise semitransparent oder volltransparent ist.

In einer weiteren Ausgestaltung ist eine Wandstärke des Hüllprofils dünner als die Wandstärke des Innenprofils. Dadurch wird eine leichte und filigrane Bauweise erzielt. Die Wandstärke des Hüllprofils ist vorzugsweise in dem Bereich dünner, in dem das Hüllprofil das Innenprofil umgibt bzw. am Innenprofil anliegt.

In einer weiteren Ausgestaltung ist benachbart zum Vorsprung des Befestigungssockels ein Sicherungsvorsprung vorhanden, der ein Herauslösen der Befestigungsstrebe verhindert. Vorzugsweise ist der Sicherungsvorsprung auf der Seite des Abstützstegs angeordnet. In einer besonderen Ausgestaltung grenzt an den Sicherungsvorsprung ein in der Höhe kleinerer Sicherungsvorsprung an, um einen Bewegungsraum der Befestigungsstrebe zu begrenzen. Der mittig angeordnete Sicherungsvorsprung kann auch beidseitig jeweils einen kleineren Sicherungsvorsprung aufweisen.

Die Aufgabe wird auch durch ein Fenster- oder Türelement gelöst umfassend ein Rahmenprofil und eine transparente Scheibe, die in einem Winkel zueinander angeordnet sind, wobei eine an diesen Winkel angepasste Beleuchtungsleiste, wie oben beschrieben, in den Winkel eingesetzt ist.

Im Folgenden wird anhand der Figuren die Erfindung näher beschrieben. In den Figuren zeigen:
Fig. 1 eine perspektivische Ansicht einer erfindungsgemäßen Beleuchtungsleiste;
Fig. 2 eine Schnittdarstellung eines Fenster- oder Türelements mit erfindungsgemäßer Beleuchtungsleiste;
Fig. 3a eine Schnittdarstellung durch eine erfindungsgemäße Beleuchtungsleiste;
Fig. 3b eine perspektivische Darstellung einer erfindungsgemäßen Beleuchtungsleiste;
Fig. 4a eine Schnittdarstellung durch einen Befestigungssockel;
Fig. 4b eine perspektivische Darstellung eines Befestigungssockels;
Fig. 5a eine Schnittdarstellung eines erfindungsgemäßen Hüllprofils;
Fig. 5b eine perspektivische Darstellung eines erfindungsgemäßen Hüllprofils;
Fig. 6a eine Schnittdarstellung durch ein transparentes Innenprofil gemäß der Erfindung; und
Fig. 6b eine perspektivische Darstellung des erfindungsgemäßen Innenprofils.

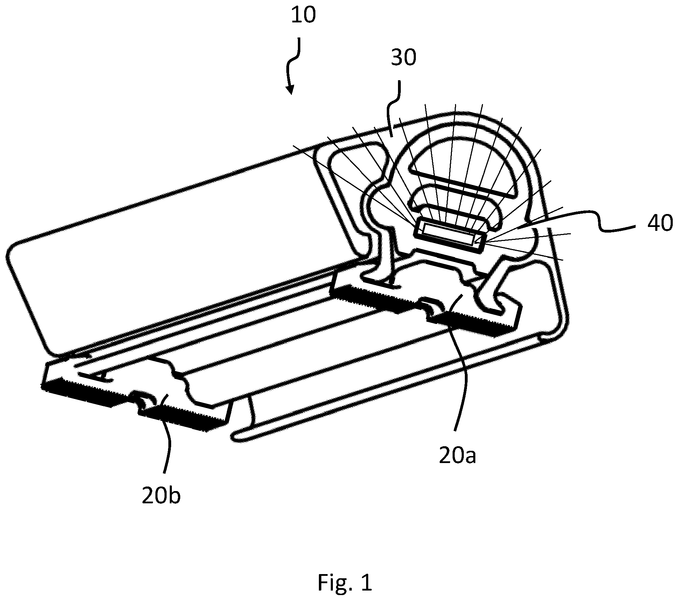

In Figur 1 ist eine perspektivische Darstellung einer erfindungsgemäßen Beleuchtungsleiste dargestellt, die an zwei Befestigungssockeln 20a, 20b befestigt ist. Die erfindungsgemäße Beleuchtungsleiste 10 umfasst ein transparentes Innenprofil 40, welches von einem transparenten Hüllprofil 30 umgeben wird, wobei das transparente Hüllprofil 30 das Innenprofil 40 wenigstens teilweise umgibt und so am Befestigungssockel 20a, 20b befestigt ist, dass eine sichere Befestigung des Innenprofils 40 ermöglicht wird.

Das Innenprofil 40 weist eine Kammer 42 auf, in der ein Leuchtelement 41 enthalten ist, welches in alle Richtungen Licht abstrahlt, welches durch das Innenprofil 40 als auch durch das transparente Hüllprofil 30 hindurchdringt und somit eine optimale Signalisierungsfunktion gewährleistet.

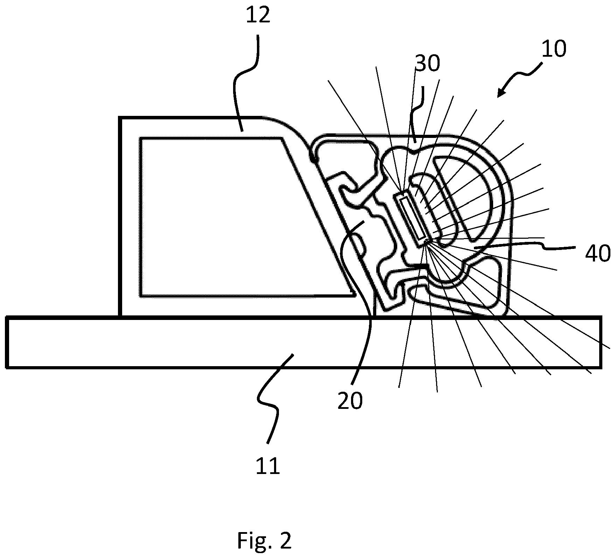

In Fig. 2 ist eine Befestigung einer erfindungsgemäßen Beleuchtungsleiste an einer Scheibe bzw. an einem Rahmenprofil eines Fenster- oder Türelements dargestellt. In der dargestellten Ausgestaltung ist der Befestigungssockel 20 an einer Auflagefläche des Rahmenprofils 12 befestigt, so dass die Kopplungselemente des Befestigungssockels frei liegen und somit das Hüllprofil 30 mit seinen korrespondierenden Vorsprüngen in die Kopplungselemente bzw. Vorsprünge des Befestigungssockels eingesetzt werden kann, um somit das Innenprofil 40 mit dem integrierten Leuchtelement 41 am Befestigungssockel 20a, 20b festlegen können.

Wie in Fig. 2 dargestellt, liegt ein Abstützsteg 34 am Rahmenprofil 12 an und bildet eine Kammer 37 zwischen Befestigungssockel 20 und Abstützsteg 34. Der Abstützsteg 34 verhindert ein Eindringen von Schmutz bzw. eine Manipulation der Beleuchtungsleiste durch Personen oder eine Beschädigung durch Vandalismus.

Auf der Seite des Abstützstegs 34 ist ein Herauslösen des Befestigungsstegs 33 vom Vorsprung 22 des Befestigungssockels 20 nicht möglich, da der Befestigungssockel 20 Sicherungsvorsprünge 24 bzw. 25 aufweist, die ein Herausdrücken des Vorsprungs 33a verhindern.

Das transparente Hüllprofil 30 weist auf der gegenüberliegenden Seite einen Montagesteg 35 auf, der vom Hüllprofil absteht und an der Scheibe 11 anliegt oder einen geringen Spalt zur Scheibe aufweist, um somit auch zu verhindern, dass in diesen Zwischenraum Schmutz eindringt bzw. dass Personen unberechtigt die Beleuchtungsleiste manipulieren können. Der Montagesteg 35 ist ausreichend steif ausgebildet, weist jedoch eine gewisse Biegsamkeit auf bzw. ist federnd ausgestaltet, so dass er mit einem Spezialwerkzeug, welches zwischen Scheibe 11 und Montagesteg 35 einführbar ist, in Richtung Innenprofil 40 gedrückt werden kann, um somit an den Befestigungssteg 32 zu gelangen, der dann mittels des Montagewerkzeugs in Richtung Mittellängsachse der Beleuchtungsleiste gedrückt werden kann, um somit vom Vorsprung 23 des Befestigungssockels gelöst zu werden.

Dazu weist der Befestigungssockel 20 im Bereich des Vorsprungs 23 einen Raum auf, der ein horizontales Wegdrücken des Vorsprungs 32a vom Vorsprung 23 des Befestigungssockels ermöglicht und somit ein Herauslösen des Befestigungsstegs des Hüllprofils 30 ermöglicht, um die Beleuchtungsleiste vom Befestigungssockel 20 zu entfernen.

Beim Montagevorgang wird zuerst der Befestigungssockel 20 auf einer Auflagefläche, beispielsweise des Rahmenprofils 12, befestigt. Dann wird das Hüllprofil 30, welches das Innenprofil 40 bereits umgibt, mit seinen Vorsprüngen 32a und 33a der Befestigungsstege 32 bzw. 33 in die hakenartigen Vorsprünge 22 und 23 des Befestigungssockels geklickt, so dass eine optimale Befestigung des Hüllprofils 30 mit dem Innenprofil 40 ermöglicht wird.

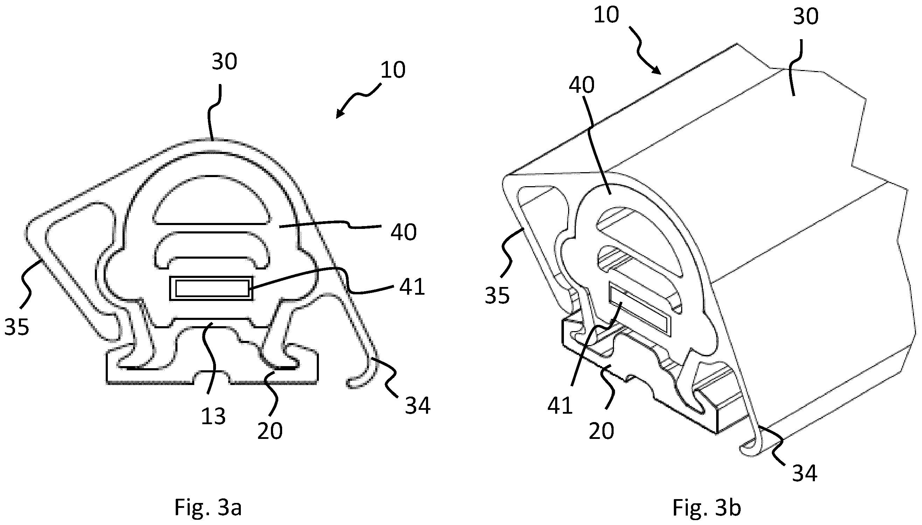

Die Figuren 3a und 3b zeigen eine Schnittdarstellung bzw. eine perspektivische Darstellung der Beleuchtungsleiste. Gemäß Fig. 3a ist zwischen dem Innenprofil 40 und dem Befestigungssockel 20 ein Luftspalt 13 vorhanden, der einerseits eine gewisse Flexibilität insbesondere bei der Montage zur Verfügung stellt als auch ein Austreten von Licht ermöglicht. Darüber hinaus wird damit herstellungstechnisch eine Toleranz bereitgestellt.

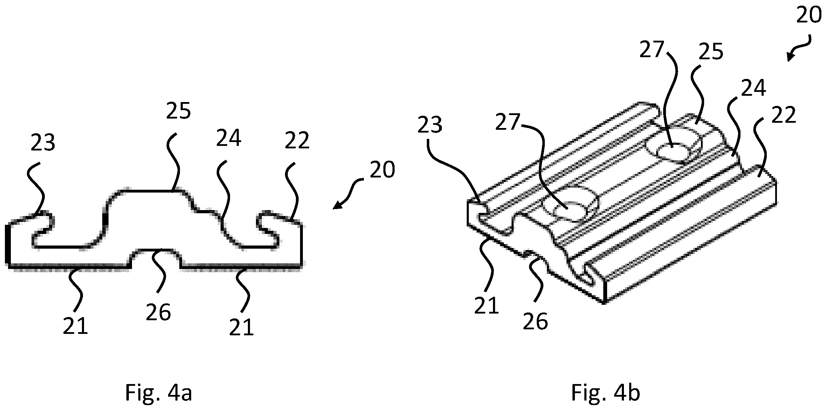

Gemäß Figur 4a bzw. 4b weist der Befestigungssockel 20 eine plane Auflagefläche 21 auf, die auf der Befestigungsfläche des Rahmenprofils 12 bzw. der Scheibe 11 aufliegt. Wie in Figur 4b dargestellt, weist der Befestigungssockel Bohrungen 27 auf, in die Schrauben bzw. Nieten zur Befestigung am Rahmenprofil 12 eingeführt werden können. Sollte der Befestigungssockel 20 geklebt werden, wird ein Klebeband auf der Auflagefläche 21 aufgebracht, welches dann auf der Befestigungsfläche des Rahmenprofils bzw. der Scheibe aufliegt und dort anhaftet. Die Auflagefläche 21 kann auch mehrere kleine Rillen zur Vergrößerung der Oberfläche aufweisen, die beim Kleben zur Aufnahme des Klebstoffs dienen. Eine Auflagefläche 21 kann eine zentral entlang der Mittelachse des Befestigungssockels 20 angeordnete Nut 26 aufweisen, durch die vorzugsweise Schrauben bzw. Nieten zur Befestigung des Befestigungssockels 20 hindurchgreifen.

Der Befestigungssockel 20 gemäß Figur 4a bzw. 4b zeigt deutlich, dass die Vorsprünge 22 und 23, die nach innen zur Mittellängsachse der Beleuchtungsleiste gerichtet sind, symmetrisch ausgebildet sind. Jedoch sind die Räume, die von diesen Vorsprüngen 22, 23 umgeben werden, nicht symmetrisch. Der Bereich des Vorsprungs 22, in den der Befestigungssteg 33 eingeführt wird und der auf der Seite des Abstützstegs 34 liegt, weist einen geringeren Bewegungsraum auf als der Vorsprung 23, in den der Befestigungssteg 32 auf der Seite des Montagestegs 35 eingeführt wird. Durch den größeren Bewegungsraum im Bereich des Vorsprungs 23 ist ein Herauslösen des Befestigungsstegs 32 vom Vorsprung 23 möglich. Auf der Seite des Befestigungsstegs 33 ist der Bewegungsraum durch die Sicherungsvorsprünge 24 bzw. 25 begrenzt. Dabei ist der erste Sicherungsvorsprung 25 zentral entlang der Mittelachse des Befestigungssockels 20 angeordnet und überragt die Vorsprünge 22, 23, die jeweils etwa auf gleich Höhe liegen.

Der erste Sicherungsvorsprung 25 kann an der Seite des Vorsprungs 22 mit einem zweiten Sicherungsvorsprung 24 ergänzt sein, wobei der zweite Sicherungsvorsprung 24 eine geringere Höhe aufweist, seitlich in den Bewegungsraum des Befestigungsstegs 33 hineinragt und diesen Bewegungsraum somit reduziert, wodurch ein Herauslösen des Befestigungsstegs 33 erschwert. Der erste Sicherungsvorsprung 25 kann einstückig mit den zweiten Sicherungsvorsprung 24 ausgebildet sein.

In einer weiteren Ausgestaltung kann der zweite Sicherungsvorsprung 24 auch weggelassen werden, wodurch ein Herauslössen des Befestigungsstegs 33 vereinfacht wird. Dies kann bspw. dann nötig sein, wenn durch weitere Umstände ein häufigeres Demontieren des Hüllprofils erforderlich ist oder die Beleuchtungsleiste in einer Umgebung eingesetzt wird, in der wenigere mutwillige Beschädigungen stattfinden.

In einer weiteren Ausgestaltung kann der zweite Sicherungsvorsprung 24 auch auf beiden Seiten des ersten Sicherungsvorsprungs 25 angeordnet sein, wodurch auch die Bewegungsräume beider Befestigungsstege 32, 33 begrenzt werden und ein Herauslössen der Befestigungsstege 32 und 33 erschwert bzw. verhindert wird.

Der Sicherungsvorsprung 25 des Befestigungssockels dient darüber hinaus auch noch der vertikalen Abstützung des Innenprofils 40 bei einer senkrechten Druckeinwirkung auf die Beleuchtungsleiste.

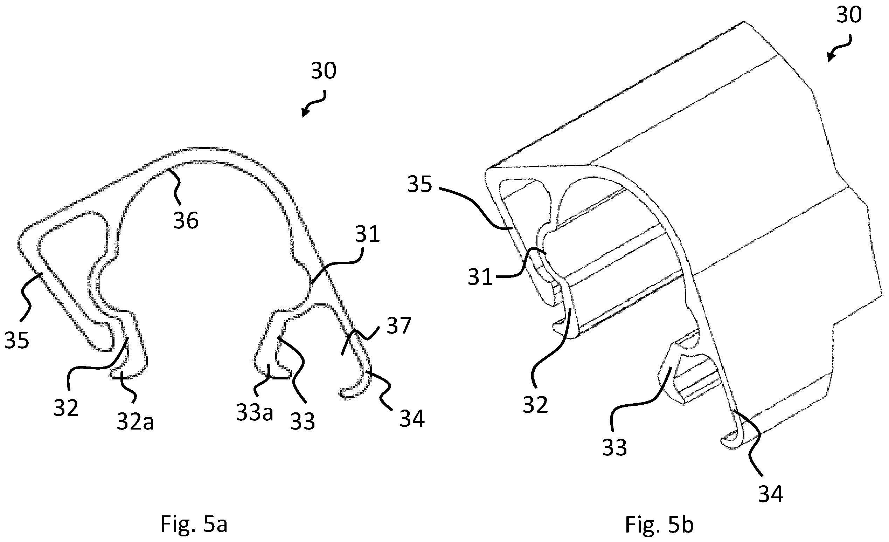

Die Figuren 5a bzw. 5b zeigen das transparente Hüllprofil 30 in einer Schnittdarstellung bzw. in einer perspektivischen Darstellung. Das semitransparente oder transparente Hüllprofil 30 ist vorzugsweise aus einem steifen Plastikmaterial, vorzugsweise Thermoplast, z.B. Polycarbonat, PMMA oder PVC ausgebildet und entspricht mit seiner Innenkontur 36 im Wesentlichen der Außenkontur des Innenprofils 40. Das Hüllprofil 30 weist Ausbuchtungen 31 auf, in die Ausstülpungen bzw. Befestigungsvorsprünge 44 des Innenprofils 40 eingreifen, um somit eine formschlüssige Befestigung des Innenprofils 40 innerhalb des Hüllprofils 30 zu ermöglichen.

Die Befestigungsstege 33 und 32 weisen eine gewisse Federkraft auf und lassen sich nach innen zusammendrücken, um in die Vorsprünge 22 und 23 vom Befestigungssockel 20 eingesetzt zu werden. Dabei greifen die Enden 32a und 33a der Befestigungsstege 32 und 33 in die entsprechenden Vorsprünge 22 und 23 des Befestigungssockels 20 hakenartig ein. Das Hüllprofil 30 weist darüber hinaus den Abstützsteg 34 auf, der an seinem Ende leicht gebogen ist, um somit einen sicheren Abschluss zum Rahmenprofil 12 zu gewährleisten, um ein Hintergreifen von dieser Seite oder eine Beschädigung durch Vandalismus zu verhindern.

Zwischen Abstützsteg 34 und Befestigungssteg 33 bzw. Befestigungssockel 20 wird eine Luftkammer 37 gebildet, wodurch der Abstützsteg 34 eine ausreichende Abschirmfunktion gewährleisten kann. Das Hüllprofil 30 weist auf der gegenüberliegenden Seite einen Montagesteg 35 auf, der einen winkligen Verlauf aufweist, wobei zwischen dem inneren Teil des Hüllprofils und dem Montagesteg ebenfalls ein Luftraum gebildet ist, um den Montagesteg 35 federnd in die Richtung des Innenprofils drücken zu können, um mit einem Spezialwerkzeug zwischen die Scheibe 11 und das Hüllprofil 30 bzw. den Montagesteg 35 zu gelangen, um ein Herausdrücken des Befestigungsstegs 32 aus dem Vorsprung 23 des Befestigungssockels 20 beim Lösen der Beleuchtungsleiste 10 vom Befestigungssockel zu ermöglichen. Der Montagesteg 35 kann dabei verschiedene Winkel aufweisen, um u.a. an den Winkel zwischen Rahmenprofil 12 und Scheibe 11 angepasst zu werden.

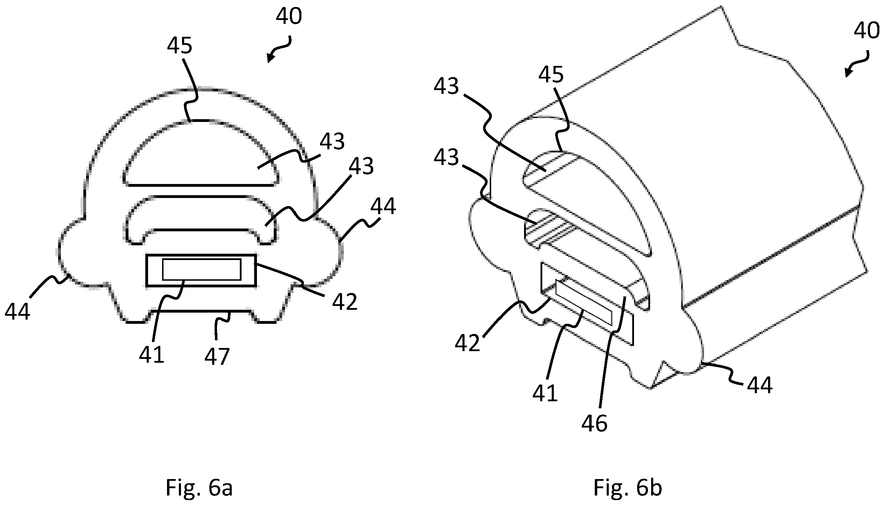

Die Figuren 6a und 6b zeigen eine Schnittdarstellung bzw. eine perspektivische Darstellung des transparenten Innenprofils 40. In der dargestellten Ausführungsform weist das Innenprofil 40 eine Kammer 42 auf, in der ein Leuchtelement 41 aufgenommen ist. Das Leuchtelement 41 kann beispielsweise ein LED-Band sein. Das LED-Band 41 ist ausreichend durch den Körper des Innenprofils 40 geschützt und kann in alle Richtungen Licht abgeben, wie es in den Figuren 1 und 2 dargestellt ist.

In Abstrahlrichtung bzw. senkrecht zur Befestigungsrichtung weist das Innenprofil 40 zwei verschiedene Luftkammern 43 auf, die das Leuchtelement 41 wenigstens teilweise umgeben. Durch die Luftkammern 43 wird eine weitere Flexibilität des Innenprofils gewährleistet, als auch eine Streuung des austretenden Lichts ermöglicht. Dazu können auch die gekrümmten Oberflächen 45 der Luftkammern 43 beitragen. Im Bereich der Luftkammer 42, in der das Leuchtelement 41 aufgenommen ist, kann beispielsweise im unteren Bereich, der dem Befestigungssockel 20 zugewandt ist, ein reflektierendes Material aufgebracht oder vorhanden sein, welches ein Reflektieren des Lichts in Abstrahlrichtung ermöglicht, so dass das Licht nicht in Richtung des Befestigungssockels 20 austreten kann und somit eine erhöhte Lichtausbeute ermöglicht wird.

Das Innenprofil 40 weist an seinen Seiten Ausstülpungen oder Befestigungsvorsprünge 44 auf, die in die Einkerbungen 31 des Hüllprofils 30 eingreifen, um somit einen ausreichenden Formschluss zwischen Hüllprofil 30 und Innenprofil 40 zu ermöglichen.

Das Innenprofil 40 ist vorzugsweise aus Silikon hergestellt, wobei dieses Silikon mit Materialien vermischt werden kann, die als Diffusor fungieren, um somit einen diffusen Lichtaustritt zu ermöglichen und zu verhindern, dass einzelne LEDs erkannt werden. Somit erscheint die Leuchtleiste 10 als durchgehendes leuchtendes Band. Auch das Hüllprofil 30 ist wenigstens teilweise transparent ausgestaltet und weist eine ausreichende Steifigkeit bzw. Festigkeit auf, um einen ausreichenden Schutz des Innenprofils 40 zu gewährleisten. Das Hüllprofil 30 ist ausreichend stabil gegen Druck bzw. Schläge von außen, um bei Einwirkungen durch Vandalismus eine Beschädigung der Beleuchtungsleiste zu verhindern.

Durch entsprechende Länge des Abstützstegs 34 bzw. des Winkels des Abstützstegs 34 bzw. des Montagestegs 35 lassen sich verschiedene Winkel zwischen Rahmenprofil 12 und Scheibe 11 realisieren, ohne dass die Befestigungssockel 20 bzw. das Innenprofil 40 besonders angepasst werden müssen.

Daher ist es nur notwendig, für verschiedene Montagewinkel zwischen Rahmenprofil und Scheibe ein entsprechendes Hüllprofil 30 zu konzipieren.

Die erfindungsgemäße Beleuchtungsleiste 10 lässt sich in Schienenfahrzeugen, wie U-Bahnen, S-Bahnen, Straßenbahnen oder auch in Bussen einfach nachrüsten und ist ausreichend robust gegen Vandalismus. Trotz allem ist aufgrund des Montagestegs 35 eine Wartung bzw. Austausch der Beleuchtungsleiste 10 möglich.

## Patentansprüche

1. Beleuchtungsleiste (10) für ein Fenster- oder Türelement von Fahrzeugen, umfassend:
wenigstens einen Befestigungssockel (20) zur Befestigung an einem Rahmenprofil (12) und/oder einer transparenten Scheibe (11),
ein wenigstens teilweise transparentes Innenprofil (40), in dem wenigstens ein Leuchtelement (41) aufgenommen ist,
ein wenigstens teilweise transparentes Hüllprofil (30), welches das Innenprofil (40) wenigstens teilweise umgibt,
**dadurch gekennzeichnet, dass**
das wenigstens teilweise transparente Hüllprofil (30) an dem wenigstens einen Befestigungssockel (20) lösbar befestigt ist, und dass das wenigstens teilweise transparente Innenprofil (40) aus einem flexiblen Material, vorzugsweise aus einem Elastomer, vorzugsweise Silikon, gebildet ist.

2. Beleuchtungsleiste nach Anspruch 1, wobei der Befestigungssockel (20) eine ebene Fläche (21) zur Anlage an dem Rahmenprofil (12) und/oder an der transparenten Scheibe (11) aufweist und/oder der Befestigungssockel (20) wenigstens ein als Vorsprung (22) ausgebildetes Kopplungselement aufweist.

3. Beleuchtungsleiste nach Anspruch 2, wobei das Hüllprofil (30) wenigstens einen dem Vorsprung (22) des Kopplungselements des Befestigungssockels (20) entsprechenden Vorsprung (32a, 33a) aufweist, um in das wenigstens eine Kopplungselement (22) des Befestigungssockels (20) einzugreifen und das Hüllprofil (30) an dem Befestigungssockel (20) festzulegen.

4. Beleuchtungsleiste nach Anspruch 2 oder 3, wobei der wenigstens eine Vorsprung (22) des Befestigungssockels (20) in Richtung einer Mittellängsachse der Beleuchtungsleiste (10) oder von dieser Mittellängsachse der Beleuchtungsleiste (10) hinweg gerichtet ist.

5. Beleuchtungsleiste nach einem der Ansprüche 2 bis 4, wobei der Befestigungssockel (20) zwei Vorsprünge (22, 23) aufweist, die beide zur Mittellängsachse der Beleuchtungsleiste (10) oder von dieser Mittellängsachse der Beleuchtungsleiste (10) hinweg gerichtet sind.

6. Beleuchtungsleiste nach einem der Ansprüche 1 bis 5, wobei das wenigstens teilweise transparente Innenprofil (40) wenigstens eine Kammer (42) zur Aufnahme des wenigstens einen Leuchtelements (41) aufweist und/oder wobei das wenigstens teilweise transparente Innenprofil (40) wenigstens eine weitere in Abstrahlrichtung des Leuchtelements (41) liegende weitere Kammer (43) aufweist, die zur Streuung des vom Leuchtelement (41) abgestrahlten Lichts dient.

7. Beleuchtungsleiste nach Anspruch 6, wobei die weitere Kammer (43) das Leuchtelement (41) wenigstens teilweise an mehr als einer Seite umgibt und/oder
die weitere Kammer (43) vom Leuchtelement (41) beabstandet ist und ein flexibles Material (46) zwischen der Kammer (42) mit dem Leuchtelement (41) und der weiteren Kammer (43) vorhanden ist, und/oder
die wenigstens eine weitere Kammer (43) eine in Abstrahlrichtung weisende gekrümmte Oberfläche (45) aufweist.

8. Beleuchtungsleiste nach einem der Ansprüche 1 bis 7, wobei das wenigstens teilweise transparente Innenprofil (40) wenigstens einen nach außen abstehenden Befestigungsvorsprung (44) aufweist, der in eine Ausnehmung (31) des Hüllprofils (30) eingreift.

9. Beleuchtungsleiste nach einem der Ansprüche 2 bis 8,
wobei das Hüllprofil (30) mehr als die Hälfte vom Außenumfang des Innenprofils (40) umgibt und/oder wobei das Hüllprofil (30) eine Innenkontur (36) aufweist, die der Außenkontur des Innenprofils (40) entspricht; und/oder
eine Innenkontur (36) des Hüllprofils (30) an der Außenkontur des Innenprofils (40) anliegt; und/oder
wobei das Hüllprofil (30) Befestigungsstreben (32, 33) aufweist, die sich in Richtung Befestigungssockel (20) erstrecken und an ihren Enden jeweils wenigstens einen Vorsprung (32a, 33a) aufweisen, der in die Kopplungselemente (22, 23) des Befestigungssockels (20) eingreift; und/oder
wobei das Hüllprofil (30) einen Abstützsteg (34) aufweist, der vom Hüllprofil (30) absteht und eine Kammer (37) zwischen einer der Befestigungsstreben (33) und dem Abstützsteg (34) bildet, wobei der Abstützsteg (34) am Rahmenprofil (12) oder an der transparenten Scheibe (11) anliegt; und/oder
wobei das Hüllprofil (30) einen Montagesteg (35) aufweist, der vom Hüllprofil (30) absteht und in Richtung Rahmenprofil (12) oder transparente Scheibe (11) gerichtet ist, wobei der Montagesteg (35) einen Zugang zu einer der Befestigungsstreben (32) des Hüllprofils (30) abschirmt, und/oder
wobei das Hüllprofil (30) steifer ist als das Innenprofil (40) und/oder, wobei das Hüllprofil (30) aus einem Thermoplast, vorzugsweise Polycarbonat, PMMA oder PVC, hergestellt ist; und/oder
wobei eine Wandstärke des Hüllprofils (30) dünner ist als die Wandstärke des Innenprofils (40).

10. Beleuchtungsleiste nach einem der Ansprüche 1 bis 9, wobei die Vorsprünge (32a, 33a) des Hüllprofils (30) nach außen gerichtet sind und hakenartig in die Kopplungselemente (22, 23) des Befestigungssockels (20) eingreifen.

11. Beleuchtungsleiste nach einem der Ansprüche 1 bis 10, wobei zwischen dem Innenprofil (40) und dem Befestigungssockel (20) ein Luftspalt (13) vorhanden ist und/oder wobei das Innenprofil (40) einen Bereich (47) aufweist, der dem Befestigungssockel (20) zugewandt ist, wobei zwischen diesem Bereich (47) und dem Befestigungssockel (20) ein Luftspalt (13) vorhanden ist.

12. Beleuchtungsleiste nach Anspruch 9, wobei die Befestigungsstrebe (32) des Hüllprofils (30) an der Seite des Montagestegs (35) mittels eines Werkzeugs, welches um den Montagesteg (35) herumgreift, vom Kopplungselement (23) lösbar ist.

13. Beleuchtungsleiste nach einem der vorhergehenden Ansprüche, wobei die Beleuchtungsleiste (10) an mehreren Befestigungssockeln (20a, 20b) befestigt ist, die voneinander beabstandet sind; und/oder wobei der wenigstens eine Befestigungssockel (20) dazu geeignet ist, am Rahmenprofil (12) oder der Scheibe (11) angeklebt und/oder angeschraubt und/oder angenietet zu werden.

14. Beleuchtungsleiste nach einem der vorhergehenden Ansprüche, wobei benachbart zum Vorsprung (22) des Befestigungssockels (20) auf der Seite des Abstützstegs (34) ein Sicherungsvorsprung (24, 25) vorhanden ist, der ein Herauslösen der Befestigungsstrebe (33) verhindert.

15. Fenster- oder Türelement umfassend ein Rahmenprofil (12) und eine transparente Scheibe (11), die in einem Winkel zueinander angeordnet sind, wobei eine an diesen Winkel angepasste Beleuchtungsleiste (10) nach einem der vorhergehenden Ansprüche 1-14 in den Winkel eingesetzt ist.

## Claims

1. A light strip (10) for a window or door element of vehicles, comprising:
at least one fastening base (20) for fastening to a frame profile (12) and/or to a transparent pane (11),
an at least partially transparent inner profile (40) in which at least one light element (41) is received,
an at least partially transparent enveloping profile (30) which at least partially surrounds the inner profile (40),
**characterised in that**
the at least partially transparent enveloping profile (30) is detachably fastened to the at least one fastening base (20), and **in that** the at least partially transparent inner profile (40) is formed from a flexible material, preferably from an elastomer, preferably silicone.

2. The light strip according to claim 1, wherein the fastening base (20) has a flat surface (21) for resting against the frame profile (12) and/or the transparent pane (11) and/or the fastening base (20) has at least one coupling element designed as a projection (22).

3. The light strip according to claim 2, wherein the enveloping profile (30) has at least one projection (32a, 33a) corresponding to the projection (22) of the coupling element of the fastening base (20) in order to engage in the at least one coupling element (22) of the fastening base (20) and to fix the enveloping profile (30) to the fastening base (20).

4. The light strip according to claim 2 or 3, wherein the at least one projection (22) of the fastening base (20) is directed in the direction of a central longitudinal axis of the light strip (10) or away from this central longitudinal axis of the light strip (10).

5. The light strip according to any one of claims 2 to 4, wherein the fastening base (20) has two projections (22, 23) which are both directed towards the central longitudinal axis of the light strip (10) or away from this central longitudinal axis of the light strip (10).

6. The light strip according to any one of claims 1 to 5, wherein the at least partially transparent inner profile (40) has at least one chamber (42) for receiving the at least one light element (41) and/or wherein the at least partially transparent inner profile (40) has at least one further chamber (43) which is located in the radiation direction of the light element (41) and which serves for scattering the light radiated by the light element (41).

7. The light strip according to claim 6, wherein the further chamber (43) at least partially surrounds the light element (41) on more than one side; and/or
the further chamber (43) is spaced from the light element (41) and a flexible material (46) is present between the chamber (42) with the light element (41) and the further chamber (43); and/or
the at least one further chamber (43) has a curved surface (45) facing in the radiation direction.

8. The light strip according to any one of claims 1 to 7, wherein the at least partially transparent inner profile (40) has at least one outwardly projecting fastening projection (44) which engages in a recess (31) of the enveloping profile (30).

9. The light strip according to any one of claims 2 to 8,
wherein the enveloping profile (30) surrounds more than half of the outer circumference of the inner profile (40) and/or wherein the enveloping profile (30) has an inner contour (36) corresponding to the outer contour of the inner profile (40); and/or
an inner contour (36) of the enveloping profile (30) rests against the outer contour of the inner profile (40); and/or
wherein the enveloping profile (30) comprises fastening struts (32, 33) extending in the direction of the fastening base (20) and having at their ends in each case at least one projection (32a, 33a) which engages in the coupling elements (22, 23) of the fastening base (20); and/or
wherein the enveloping profile (30) has a supporting bar (34) projecting from the enveloping profile (30) and forming a chamber (37) between one of the fastening struts (33) and the supporting bar (34), the supporting bar (34) resting against the frame profile (12) or the transparent pane (11); and/or
wherein the enveloping profile (30) has a mounting bar (35) projecting from the enveloping profile (30) and directed in the direction of the frame profile (12) or the transparent pane (11), the mounting bar (35) shielding access to one of the fastening struts (32) of the enveloping profile (30), and/or
wherein the enveloping profile (30) is more rigid than the inner profile (40) and/or, wherein the enveloping profile (30) is made of a thermoplastic, preferably polycarbonate, PMMA or PVC; and/or
wherein a wall thickness of the enveloping profile (30) is thinner than the wall thickness of the inner profile (40).

10. The light strip according to any one of claims 1 to 9, wherein the projections (32a, 33a) of the enveloping profile (30) are outwardly directed and engage in a hook-like manner in the coupling elements (22, 23) of the fastening base (20).

11. The light strip according to any one of claims 1 to 10, wherein an air gap (13) is present between the inner profile (40) and the fastening base (20) and/or wherein the inner profile (40) has a region (47) facing the fastening base (20), wherein an air gap (13) is present between this region (47) and the fastening base (20).

12. The light strip according to claim 9, wherein the fastening strut (32) of the enveloping profile (30) is detachable from the coupling element (23) on the side of the mounting bar (35) by means of a tool which grips around the mounting bar (35).

13. The light strip according to any one of the preceding claims, wherein the light strip (10) is fastened to multiple fastening bases (20a, 20b) spaced apart from one another; and/or wherein the at least one fastening base (20) is adapted to be glued and/or screwed and/or riveted to the frame profile (12) or the pane (11).

14. The light strip according to any one of the preceding claims, wherein a securing projection (24, 25) is present adjacent to the projection (22) of the fastening base (20) on the side of the supporting bar (34), which prevents the fastening strut (33) from being detached.

15. A window or door element comprising a frame profile (12) and a transparent pane (11) which are arranged in an angle relative to one another, wherein a light strip (10) according to any of the preceding claims 1-14 adapted to this angle is inserted in the angle.

## Revendications

1. Baguette d'éclairage (10) pour un élément de fenêtre ou de portière de véhicules, comprenant :
au moins un socle de fixation (20) pour la fixation sur un profilé d'encadrement (12) et/ou une vitre transparente (11),
un profilé intérieur (40) au moins partiellement transparent, dans lequel au moins un élément lumineux (41) est reçu,
un profilé d'enveloppe (30) au moins partiellement transparent, entourant au moins partiellement le profilé intérieur (40),
**caractérisée en ce que**
le au moins un profilé d'enveloppe (30) au moins partiellement transparent peut être fixé sur le au moins un socle de fixation (20) de manière détachable, et **en ce que** le au moins un profilé intérieur (40) au moins partiellement transparent est formé à partir d'un matériau souple, de préférence à partir d'un élastomère, de préférence une silicone.

2. Baguette d'éclairage selon la revendication 1, dans laquelle le socle de fixation (20) comporte une surface plane (21) qui s'applique sur le profilé d'encadrement (12) et/ou sur la vitre transparente (11) et/ou le socle de fixation (20) comporte au moins un élément de couplage réalisé sous la forme d'une saillie (22).

3. Baguette d'éclairage selon la revendication 2, dans laquelle le profilé d'enveloppe (30) comporte au moins une saillie (32a, 33a) correspondant à la saillie (22) de l'élément de couplage du socle de fixation (20), afin de s'engager dans le au moins un élément de couplage (22) du socle de fixation (20) et de fixer le profilé d'enveloppe (30) sur le socle de fixation (20).

4. Baguette d'éclairage selon la revendication 2 ou 3, dans laquelle la au moins une saillie (22) du socle de fixation (20) est dirigée vers un axe longitudinal central de la baguette d'éclairage (10) ou s'éloigne de cet axe longitudinal central de la baguette d'éclairage (10).

5. Baguette d'éclairage selon l'une des revendications 2 à 4, dans laquelle le socle de fixation (20) comporte deux saillies (22, 23) toutes deux dirigées vers l'axe longitudinal central de la baguette d'éclairage (10) ou s'éloignant de cet axe longitudinal central de la baguette d'éclairage (10).

6. Baguette d'éclairage selon l'une des revendications 1 à 5, dans laquelle le au moins un profilé intérieur (40) au moins partiellement transparent comporte au moins une chambre (42) pour recevoir le au moins un élément lumineux (41) et/ou dans laquelle le profilé intérieur (40) au moins partiellement transparent comporte au moins une chambre supplémentaire (43) située dans une direction d'émission de l'élément lumineux (41), laquelle chambre supplémentaire sert à diffuser la lumière émise à partir de l'élément lumineux (41).

7. Baguette d'éclairage selon la revendication 6, dans laquelle la chambre supplémentaire (43) entoure au moins partiellement l'élément lumineux (41) sur plus d'un côté et/ou
la chambre supplémentaire (43) est espacée de l'élément lumineux (41) et un matériau souple (46) est présent entre la chambre (42) ayant l'élément lumineux (41) et la chambre supplémentaire (43), et/ou
la au moins une chambre supplémentaire (43) comporte une surface incurvée (45) dirigée dans la direction d'émission.

8. Baguette d'éclairage selon l'une des revendications 1 à 7, dans laquelle le profilé intérieur (40) au moins partiellement transparent comporte au moins une saillie de fixation (44) faisant saillie vers l'extérieur, qui s'engage dans un évidement (31) du profilé d'enveloppe (30).

9. Baguette d'éclairage selon l'une des revendications 2 à 8,
dans laquelle le profilé d'enveloppe (30) entoure plus de la moitié de la circonférence extérieure du profilé intérieur (40) et/ou dans laquelle le profilé d'enveloppe (30) présente un contour intérieur (36) correspondant au contour extérieur du profilé intérieur (40) ; et/ou
un contour intérieur (36) du profilé d'enveloppe (30) vient en appui sur le contour extérieur du profilé intérieur (40), et/ou
dans laquelle le profilé d'enveloppe (30) comporte des pattes de fixation (32, 33) s'étendant en direction du socle de fixation (20) et comportant respectivement au moins une saillie (32a, 33a) à leurs extrémités, laquelle saillie s'engage dans les éléments de couplage (22, 23) du socle de fixation (20) ; et/ou
dans laquelle le profilé d'enveloppe (30) comporte une nervure d'appui (34) faisant saillie à partir du profilé d'enveloppe (30) et formant une chambre (37) entre l'une des pattes de fixation (33) et la nervure d'appui (34), dans laquelle la nervure d'appui (34) vient en appui sur le profilé d'encadrement (12) ou sur la vitre transparente (11) ; et/ou
dans laquelle le profilé d'enveloppe (30) comporte une nervure de montage (35) faisant saillie à partir du profilé d'enveloppe (30) et dirigée vers le profilé d'encadrement (12) ou la vitre transparente (11), dans laquelle la nervure de montage (35) empêche un accès à l'une des pattes de fixation (32) du profilé d'enveloppe (30), et/ou
dans laquelle le profilé d'enveloppe (30) est plus rigide que le profilé intérieur (40) et/ou dans laquelle le profilé d'enveloppe (30) est fabriqué à partir d'une matière thermoplastique, de préférence du polycarbonate, du PMMA ou du PVC ; et/ou
dans laquelle une épaisseur de paroi du profilé d'enveloppe (30) est plus mince que l'épaisseur de paroi du profilé intérieur (40).

10. Baguette d'éclairage selon l'une des revendications 1 à 9, dans laquelle les saillies (32a, 33a) du profilé d'enveloppe (30) sont dirigées vers l'extérieur et viennent en prise dans les éléments de couplage (22, 23) du socle de fixation (20) à la manière de crochets.

11. Baguette d'éclairage selon l'une des revendications 1 à 10, dans laquelle il existe un espace d'air (13) entre le profilé intérieur (40) et le socle de fixation (20) et/ou dans laquelle le profilé intérieur (40) comporte une zone (47) dirigée vers le socle de fixation (20), dans laquelle il existe un espace d'air (13) entre cette zone (47) et le socle de fixation (20).

12. Baguette d'éclairage selon la revendication 9, dans laquelle la patte de fixation (32) du profilé d'enveloppe (30) du côté de la nervure de montage (35) peut être détachée de l'élément de couplage (23) au moyen d'un outil qui vient en prise autour de la nervure de montage (35).

13. Baguette d'éclairage selon l'une des revendications précédentes, dans laquelle la baguette d'éclairage (10) est fixée sur plusieurs socles de fixation (20a, 20b) espacés l'un de l'autre ; et/ou dans laquelle le au moins un socle de fixation (20) est adapté pour être collé et/ou vissé et/ou riveté sur le profilé d'encadrement (12) ou la vitre (11).

14. Baguette d'éclairage selon l'une des revendications précédentes, dans laquelle il existe une saillie de blocage (24, 25) adjacente à la saillie (22) du socle de fixation (20) sur la nervure d'appui du côté de la nervure d'appui (34), laquelle saillie empêche un détachement de la patte de fixation (33).

15. Élément de fenêtre ou de portière comprenant un profilé d'encadrement (12) et une vitre transparente (11) agencés l'un par rapport à l'autre dans une cornière, dans lequel une baguette d'éclairage (10) selon l'une des revendications 1 à 14 précédentes, adaptée à cette cornière, est insérée dans la cornière.
